# EUROPÄISCHE PATENTSCHRIFT

(11) **EP 1 570 010 B1**
(45) Veröffentlichungstag und Bekanntmachung des Hinweises auf die Patenterteilung: **02.05.2007**
(21) Anmeldenummer: 03792131.9
(22) Anmeldetag: 06.08.2003
(51) Int. Cl.: C09D 5/16, G05D 21/02

(54) **BESCHICHTUNG VON OBERFLÄCHEN, DIE MIT EINER FLÜSSIGKEIT IN KONTAKT KOMMEN, ZUR VERHINDERUNG VON BIOLOGISCHEM BEWUCHS**
COATING OF SURFACES ENTERING INTO CONTACT WITH A LIQUID IN ORDER TO PREVENT BIOLOGICAL VEGETATION
APPLICATION D'UN REVETEMENT SUR DES SURFACES VENANT EN CONTACT AVEC UN LIQUIDE, POUR EMPECHER LA COLONISATION PAR DES ESPECES BIOLOGIQUES

(30) Priorität: 20.08.2002 DE 10238981
(43) Veröffentlichungstag der Anmeldung: 07.09.2005
(73) Patentinhaber: Bioplan GmbH Institut für angewandte Biologie und Landschaftsplanung, 18211 Ostseebad Nienhagen (DE)
(72) Erfinder: SANDROCK, Stefan, 18211 Nienhagen (DE); SCHARF, Eva-Maria, 18059 Rostock (DE); NEUMANN, Hans-Georg, 18146 Rostock (DE); REITER, Konrad, 18356 Barth (DE); FRANZ, Axel, 18198 Kritzmow (DE); GÜNTHER, Eggert, 18209 Doberan (DE)
(74) Vertreter: Baumbach, Friedrich
(86) Internationale Anmeldenummer: PCT/DE2003/002649
(87) Internationale Veröffentlichungsnummer: WO 2004/018572

(56) Entgegenhaltungen:
- DE-A- 4 109 197
- US-A- 4 869 016

## Beschreibung

Die Erfindung betrifft eine spezielle Beschichtung von Oberflächen, die mit einer Flüssigkeit, vor allem mit See- oder Süßwasser, in Kontakt kommen, zur Verhinderung von biologischem Bewuchs durch periodische Änderungen des pH-Wertes der die Oberflächen unmittelbar umgebenden Flüssigkeitsschicht.
Anwendungsgebiete der Erfindung sind die Schifffahrt, Hafenanlagen, Wasserbauanlagen, off-shore-Technik und Kühlsysteme.

Der Ansatz von Bewuchsorganismen kann an technisch genutzten Oberflächen zu erheblichen Funktionsbeeinträchtigungen führen. So führt in der Schifffahrt der Ansatz von Seepocken, Muscheln und Algen am Schiffsrumpf zu höheren Reibungswiderständen und damit bei gleicher Geschwindigkeit zu höherem Treibstoffverbrauch. In seewasserführenden Rohrsystemen kann Bewuchs Verstopfung bis zu völligem Funktionsverlust hervorrufen.

Alternative Methoden zur Bewuchsverhinderung werden mit der Entwicklung von:
- silikon- oder teflonhaltigen Anstrichen, bei denen über die Modifizierung der Oberflächenspannung die Anhaftung der Organismen reduziert wird (DE 2601928 B2, EP 0320716 B1, EP 0489998 A1),
- ablativen Anstrichen, die sich während der Fahrt schichtenweise ablösen und damit auch dem Bewuchs zumindest teilweise den Haftgrund entziehen (DT 2706181 A1),
- der Delphinhaut funktional nachempfundenen Anstrichen (BROEG, H. (2001) Walhaut gegen Seepocken, mare No. 26, Juni/Juli 2001, S. 116-119),
- dem Fell von Robben funktional nachempfundenen Anstrichen (CealCoat (2001) Firmenprospekt, sealcoats.com),
- Abschottungen in Kühlsystemen, in denen durch zeitweise drastische Temperaturerhöhung im Wasserkörper die Larven/Sporen der Organismen abgetötet werden (DE 199 21 433),
- elektrisch leitenden Anstrichen, auf deren Oberfläche durch Stromfluss toxisch wirkende Elektrolyseprodukte, insbesondere Chlor-Ionen, entstehen (JP 63-101464, JP 63-103789, EP 0 369 557),
verfolgt und in begrenztem Maß auch schon angewandt.

Die großtechnische Anwendung der genannten Verfahren hat sich mit Ausnahme der ablativen Farben und der Silikonbeschichtungen teils aus technischen, teils aus Kostengründen bisher nicht durchgesetzt. Bei den bisher bekannten elektrisch leitenden Anstrichen ist als weiterer Nachteil die Umweltbelastung durch frei werdende schädliche Substanzen, insbesondere Chlor-Ionen, zu nennen.

Aus DE 41 09 197 C2 und DE 41 09 198 C2 ist ein Verfahren zur Beeinflussung des pH-Wertes an Oberflächen von Festkörpern in flüssigen Medien bekannt, wobei eine Schicht aus einem Bindemittel und Makromolekülen mit freien an- und kationischen Gruppen am Molekül aufgebracht ist. Dabei wird an diesen Anstrichfilm eine Gleichspannung angelegt, wodurch in einer dünnen Wasserschicht über dem Anstrich extreme pH-Werte gebildet werden. Dieses Verfahren hat jedoch den Nachteil, dass sich die Verschiebung des pH-Wertes an der Stelle konzentriert, die der Gegenelektrode am nächsten ist. Dieses Verfahren läßt sich demnach in der Praxis nicht realisieren, weil es für eine großflächige Anwendung nicht geeignet ist.

Nach derzeitigem Stand der Technik wird die Bewuchsverhinderung überwiegend mit biozidhaltigen Anstrichen (Antifoulings) oder Verfahren mit biozider Wirkung realisiert. Ihre Wirkung basiert auf der Abgabe der Bioziden in das umgebende Wasser, was in Gebieten großflächiger Anwendung, wie beispielsweise in Häfen, Werften und auf viel befahrenen Schifffahrtsrouten zu massiven Umweltproblemen führt.

Der Erfindung liegt die Aufgabe zu Grunde, eine spezielle, umweltfreundliche Beschichtung von Oberflächen bereitzustellen, die den biologischen Bewuchs bei Änderungen des pH-Wertes der die Oberflächen unmittelbar umgebenden Flüssigkeitsschicht verhindert und gleichmäßige pH-Wert-Änderungen über der gesamten Oberfläche garantieren. Bei diesen pH-Wert-Änderungen sollen keine umweltschädlichen Substanzen, wie z.B. Chlor, gebildet bzw. freigesetzt werden.

Die Aufgabe wird durch den erfindungsgemäßen Beschichtungsaufbau und durch ein Verfahren zur Verhinderung von biologischem Bewuchs realisiert.

Die Erfindung wird gemäß den Patentansprüchen realisiert.

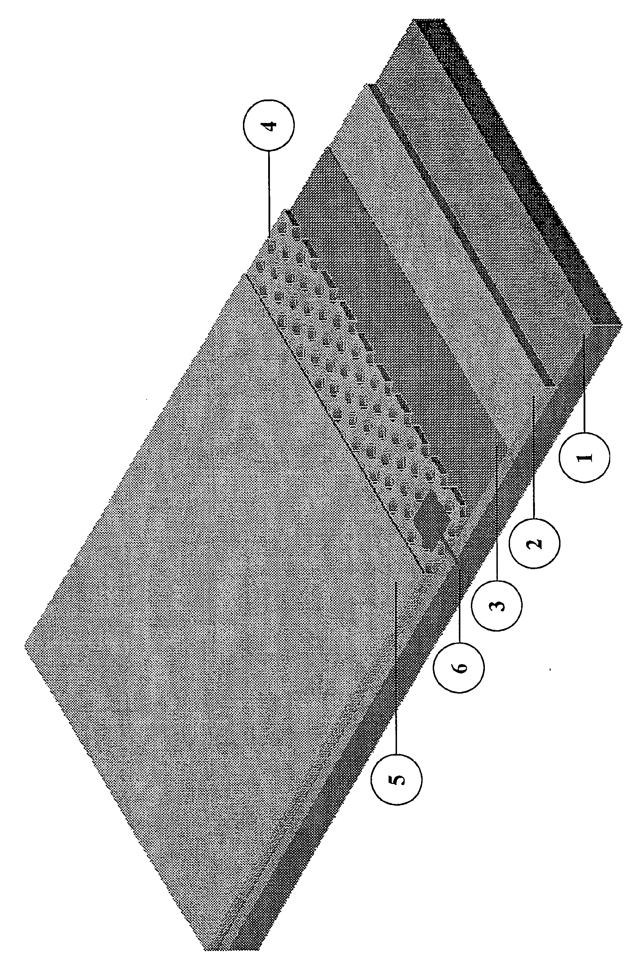

Die erfindungsgemäße Beschichtung besteht aus mehreren Schichten (Abbildung 1), wobei
- auf die zu schützende Oberfläche (1), sofern die Oberfläche selbst elektrisch leitfähig ist, mindestens eine elektrisch isolierende Schicht (2) aufgebracht ist; und
   - auf die isolierende Schicht (2) bzw. auf die zu schützende Oberfläche (1), sofern die Oberfläche selbst nicht elektrisch leitfähig ist, eine elektrisch leitfähige Kohlenstofffolie (4) mit Hilfe einer elektrisch leitfähigen Klebschicht (3) aufgeklebt ist; und
   - auf die elektrisch leitfähige Kohlenstofffolie (4) eine wasserbeständige, mechanisch stabile und gegenüber basischen und sauren pH-Werten beständige Deckschicht (5) aufgebracht ist, die eine leitfähige Verbindung zwischen der Kleber (3)- Kohlenstofffolie (4)-Schicht und dem wässrigen Umbebungsmedium entweder durch eigene Leitfähigkeit oder durch Mikroporen, die einen gewissen Durchtritt der umgebenden Flüssigkeit gestatten, ermöglicht, deren elektrische Leitfähigkeit jedoch geringer ist als die der Kleber (3)- Kohlenstofffolie (4)-Schicht;
- sich mindestens eine Gegenelektrode in dem flüssigen Umgebungsmedium befindet, mit der durch Anlegen einer Spannung an die Elektroden ein elektrisches Gleichstromfeld erzeugt werden kann.

Die Kohlenstofffolie (4), bevorzugt eine Graphitfolie, ist mit einem elektrischen Kontakt (6) versehen und fungiert als Elektrode. In dem flüssigen Umgebungsmedium befindet sich mindestens eine Gegenelektrode und durch Anlegen einer Spannung an die Elektroden wird ein elektrisches Gleichstromfeld erzeugt. Durch das Gleichstromfeld, das umpolbar und regelbar ist, wird eine Verschiebung des pH-Wertes der die Oberfläche unmittelbar umgebenden Flüssigkeitsschicht erzeugt, wobei die Richtung und Amplitude der Verschiebung des pH-Wertes über die Polarität und Stromdichte regelbar ist.

Die elektrisch leitfähigen Deckschichten (5) bestehen bevorzugt aus leitfähigem Epoxidharz. Gemäß der Erfindung können jedoch auch nicht leitfähige Schichten aufgebracht werden, die einen gewissen Durchtritt der umgebenden Flüssigkeit ermöglichen und somit den elektrischen Kontakt zwischen der Kohlenstofffolie (4) und dem Umgebungsmedium gewährleisten.

Die Gegenelektrode kann sowohl stationär im Umgebungsmillieu, z.B. im Hafen, als auch in geeigneter Weise auf der zu schützenden Oberfläche angebracht sein, z.B. elektrisch isoliert an der Oberfläche eines Schiffsrumpfes.

Die Beschichtung kann ebenso in Segmenten angeordnet sein, wobei jedes Segment separat angesteuert werden kann. Erfolgt die Erzeugung des elektrischen Feldes segmentweise und umlaufend, können auch größere Flächen energieeffizient vor biologischem Bewuchs bewahrt werden.

Gegenstand der Erfindung ist weiterhin ein Verfahren zur Verhinderung von biologischem Bewuchs mit der erfindungsgemäßen Beschichtung, wobei an dem elektrischen Kontakt (6) und der Gegenelektrode eine über ein Steuergerät regelbare Spannung angelegt wird und die Spannung so eingestellt wird, dass der pH-Wert der die Oberfläche unmittelbar umgebenden Flüssigkeitsschicht entweder über oder unter dem pH-Wert der Flüssigkeit liegt. Wechsel in der Polarität bewirken wechselnde pH-Werte, wobei der erzeugte pH-Wert, der über dem Normalwert der Flüssigkeit liegt, zwischen 8 und 11, vorzugsweise zwischen 9 und 10, liegt; und der erzeugte pH-Wert, der unter dem Normalwert der Flüssigkeit liegt, zwischen 2 und 6, vorzugsweise zwischen 3 und 4, liegt.
Die Dauer der pH-Wert-Änderung beträgt jeweils 1-10 Minuten, vorzugsweise 4 Minuten.

Zwischen den pH-Wert-Änderungen werden Pausen eingelegt, in denen kein elektrisches Feld angelegt wird, und die vorzugsweise 1-30 Minuten lang sind, wobei die Pausen zwischen der ersten, dritten, fünften, siebten, usw. Verschiebung 1-5 Minuten, vorzugsweise 2 Minuten; und zwischen der zweiten, vierten, sechsten, achten, usw. Verschiebung 5-30 Minuten, vorzugsweise 15 Minuten, betragen.

Der besondere Schichtaufbau der erfindungsgemäßen Beschichtung und das beanspruchte Verfahren ermöglichen im Gegensatz zu den in DE 41 09 197 C2 und DE 41 09 198 C2 beschriebenen Verfahren eine gleichmäßige Verteilung der pH-Wert-Änderungen über die gesamte zu schützende Fläche.

Die erfindungsgemäße Beschichtung und das Verfahren sind somit in der Lage, für Bewuchsorganismen und deren Larven lebensfeindliche Bedingungen zu schaffen, ohne die Umwelt zu belasten und für den großtechnischen Einsatz, auch für große Flächen, geeignet.

Als mögliche Anwendungsgebiete kommen alle Bereiche der Sportboot- und Berufsschifffahrt, off-shore-Konstruktionen, See- und Hafenanlagen, Kühlsysteme und Geräte zur kontinuierlichen Erfassung von Messdaten im aquatischen Bereich in Frage.

Die Erfindung wird im Folgenden an einem Ausführungsbeispiel näher erläutert.

Auf einer Schiffsaußenhaut werden zum Korrosionsschutz und zur elektrischen Isolation 1 Primer und 3 Schichten 2-K-Epoxidharz mit einer Gesamtschichtstärke von 300 µm aufgetragen. Der weitere Schichtaufbau besteht aus:
- einer Klebschicht aus leitfähigem Epoxidharz (50 µm),
- einer gelochten Graphitfolie, Lochgröße 2 mm (200 µm),
- 2 Deckschichten aus leitfähigem Epoxidharz (100 µm).
Die Graphitfolie wird mit einer selbstklebenden Kupferfolie kontaktiert. Als Gegenelektrode wird eine Graphitelektrode verwendet. Die angelegte Spannung bewegt sich zwischen +/- 2 V und +/- 10 V.
Der Schaltrhythmus, bezogen auf die zu schützende Oberfläche, setzt sich zusammen aus: 4 min kathodisch, 2 min Pause, 4 min anodisch, 15 min Pause 4 min kathodisch usw.. Der auf der Oberfläche mit einer Mikroelektrode registrierte pH-Wert bewegt sich, dem Schaltrhythmus folgend in Abhängigkeit von der angelegten Spannung, zwischen 3,5 und 10.

### Legende zur Abbildung:

- 1 -: zu schützende Oberfläche
- 2 -: elektrisch isolierende Schicht
- 3 -: elektrisch leitfähige Klebschicht
- 4 -: Kohlenstofffolie
- 5 -: elektrisch leitfähige Deckschicht
- 6 -: elektrischer Kontakt

## Patentansprüche

1. Beschichtung von Oberflächen, die mit einer Flüssigkeit, vor allem mit See- oder Süßwasser, in Kontakt kommen, zur Verhinderung von biologischem Bewuchs durch periodische Änderungen des pH-Wertes der die Oberflächen unmittelbar umgebenden Flüssigkeitsschicht, **dadurch gekennzeichnet, dass**
• die Oberflächenbeschichtung aus mehreren Schichten besteht, wobei
- auf die zu schützende Oberfläche (1), sofern die Oberfläche selbst elektrisch leitfähig ist, mindestens eine elektrisch isolierende Schicht (2) aufgebracht ist; und
- auf die isolierende Schicht (2) bzw. auf die zu schützende Oberfläche (1), sofern die Oberfläche selbst nicht elektrisch leitfähig ist, eine elektrisch leitfähige Kohlenstofffolie (4), bevorzugt Graphitfolie, mit Hilfe einer elektrisch leitfähigen Klebschicht (3) aufgeklebt ist; und
- auf die elektrisch leitfähige Kohlenstofffolie (4) eine wasserbeständige, mechanisch stabile und gegenüber basischen und sauren pH-Werten beständige Deckschicht (5) aufgebracht ist, die eine leitfähige Verbindung zwischen der Kleber (3)- Kohlenstofffolie (4)-Schicht und dem wässrigen Umbebungsmedium entweder durch eigene Leitfähigkeit oder durch Mikroporen, die einen gewissen Durchtritt der umgebenden Flüssigkeit gestatten, ermöglicht, deren elektrische Leitfähigkeit jedoch geringer ist als die der Kleber (3)- Kohlenstofffolie (4)-Schicht;
• die Kohlenstofffolie (4)-Schicht mit einem elektrischen Kontakt (6) versehen ist; und
• sich mindestens eine Gegenelektrode in dem flüssigen Umgebungsmedium befindet, mit der durch Anlegen einer Spannung an die Elektroden ein elektrisches Gleichstromfeld erzeugt werden kann, das umpolbar und regelbar ist und das in der die Oberfläche unmittelbar umgebenden Flüssigkeitsschicht eine Verschiebung des pH-Wertes erzeugt, wobei die Richtung und Amplitude der Verschiebung des pH-Wertes über die Polarität und Stromdichte regelbar ist.

2. Beschichtung nach Anspruch 1, **dadurch gekennzeichnet, dass**
• die Kohlenstofffolie (4) mit Löchern versehen ist; und
• in einem als Klebschicht (3) fungierenden leitfähigen Polymer eingebettet ist.

3. Beschichtung nach Anspruch 1-2, **dadurch gekennzeichnet, dass**
• die isolierende Schicht (2) aus mindestens einer, vorzugsweise 3, Polymer-Schichten, vorzugsweise 2-K-Epoxidharz, besteht; und
• die leitfähige Klebeschicht (3) aus einem leitfähigem Polymer besteht; und
• die Kohlenstofffolie mit Löchern (4) versehen ist; und
• die Deckschicht (5) aus mindestens einer, vorzugsweise 2, Schichten aus leitfähigem Polymer und/oder Polymerschichten, die Mikroporen aufweisen, besteht.

4. Beschichtung nach Anspruch 1-3, **dadurch gekennzeichnet, dass**
die Deckschicht (5) aus graphit- und/oder rußgefülltem Polymer besteht.

5. Beschichtung nach Anspruch 1-4, **dadurch gekennzeichnet, dass**
als elektrischer Kontakt (6) eine selbstklebende Kupferfolie verwendet wird.

6. Beschichtung nach Anspruch 1-5, **dadurch gekennzeichnet, dass**
als Gegenelektrode eine Graphitelektrode oder Ferro-Siliciumelektrode verwendet wird.

7. Beschichtung nach Anspruch 1-6, **dadurch gekennzeichnet, dass**
an dem elektrischen Kontakt (6) und der Gegenelektrode eine Spannung angelegt ist, die über ein Steuergerät regelbar ist.

8. Verfahren zur Verhinderung von biologischem Bewuchs mit einer Beschichtung nach Anspruch 1-7, **dadurch gekennzeichnet, dass**
an dem elektrischen Kontakt (6) und der Gegenelektrode eine über ein Steuergerät regelbare Spannung angelegt wird, wobei die Spannung so eingestellt wird, dass der pH-Wert der die Oberfläche unmittelbar umgebenden Flüssigkeitsschicht entweder in basischer oder in saurer Richtung vom Original-pH-Wert der Flüssigkeit abweicht.

9. Verfahren nach Anspruch 8, **dadurch gekennzeichnet, dass** im Wechsel
• pH-Werte erzeugt werden, die über dem Normalwert der Flüssigkeit liegen; und
• pH-Werte erzeugt werden, die unter dem Normalwert der Flüssigkeit liegen.

10. Verfahren nach Anspruch 8 und 9, **dadurch gekennzeichnet, dass**
• der erzeugte pH-Wert, der über dem Normalwert der Flüssigkeit liegt, zwischen 8 und 11, vorzugsweise zwischen 9 und 10, liegt; und
• der erzeugte pH-Wert, der unter dem Normalwert der Flüssigkeit liegt, zwischen 2 und 6, vorzugsweise zwischen 3 und 4, liegt.

11. Verfahren nach Anspruch 8-10, **dadurch gekennzeichnet, dass**
die Dauer der pH-Wert-Änderung jeweils 1-10 Minuten, vorzugsweise 4 Minuten, beträgt.

12. Verfahren nach Anspruch 8-11, **dadurch gekennzeichnet, dass**
zwischen den pH-Wert-Änderungen Pausen eingelegt werden, in denen kein elektrisches Feld angelegt wird, und die vorzugsweise 1-30 Minuten lang sind.

13. Verfahren nach Anspruch 8-12, **dadurch gekennzeichnet, dass**
zwischen den pH-Wert-Änderungen Pausen eingelegt werden, in denen kein elektrisches Feld angelegt wird, wobei die Pausen zwischen der ersten, dritten, fünften, siebten, usw. Verschiebung 1-5 Minuten, vorzugsweise 2 Minuten; und zwischen der zweiten, vierten, sechsten, achten, usw. Verschiebung 5-30 Minuten, vorzugsweise 15 Minuten, betragen.

14. Verfahren nach Anspruch 8-13, **dadurch gekennzeichnet, dass**
das Anlegen des elektrischen Feldes und die Änderung des pH-Wertes der die Oberflächen unmittelbar umgebenden Flüssigkeitsschicht segmentweise und umlaufend einzeln erfolgt.

## Claims

1. Coating of surfaces, which get in contact with a liquid, mainly with sea water or fresh water, for the prevention of biological fouling by periodical changes of the pH value of the liquid layer directly surrounding the surfaces, being **characterized by** the fact that
• the surface coating consists of several layers, where
- onto the surface to be protected (1), provided that the surface itself is electrically conductive, at least one electrically insulating layer (2) is applied; and
- onto the insulating layer (2) or the surface to be protected (1) respectively, provided that the surface itself is not electrically conductive, an electrically conductive carbon foil (4), preferably graphite foil, is stuck by means of an electrically conductive adhesive coat (3); and
- onto the electrically conductive carbon foil (4) a top coating (5) being water-resistant, mechanically stable and resistant to alkaline and acid pH values is applied, which makes possible a conductive connection between the adhesive (3)-carbon foil (4)-coat and the aqueous surrounding medium either by own conductivity or by micropores, which permit a certain passage of the surrounding liquid, the electrical conductivity of which is, however, smaller than that of the adhesive (3)-carbon foil (4)-coat;
• the carbon foil (4)-coat is provided with an electrical contact (6); and
• there is at least one counter-etectrode in the liquid surrounding medium by which an electrical direct-current field can be generated when applying a voltage to the electrodes and the polarity of which can be changed and which is controllable, and which generates a shift of the pH value in the liquid layer directly surrounding the surface, where the direction and the amplitude of the shift of the pH value are controllable through the polarity and the current density.

2. Coating according to claim 1, being **characterized by** the fact that
• the carbon foil (4) is provided with holes; and
• is embedded in a conductive polymer functioning as an adhesive coat (3).

3. Coating according to claims 1-2, being **characterized by** the fact that
• the insulating layer (2) consists of at least one, preferably 3 polymer coats, preferably 2-K epoxy resin; and
• the conductive adhesive coat (3) consists of a conductive polymer; and
• the carbon foil (4) is provided with holes; and
• the top coating (5) consists of at least one, preferably 2 coats of conductive polymer and/or polymer coats which have micropores.

4. Coating according to claims 1-3, being **characterized by** the fact that
• the top coating (5) consists of a polymer filled with graphite and/or soot.

5. Coating according to claims 1-4, being **characterized by** the fact that
• a self-adhesive copper foil is used as an electrical contact (6).

6. Coating according to claims 1-5, being **characterized by** the fact that
• a graphite electrode or ferrosilicon electrode is used as a counter-electrode.

7. Coating according to claims 1-6, being **characterized by** the fact that
• a voltage, which is adjustable via a control unit, is applied to the electrical contact (6) and the counter-electrode.

8. Method for the prevention of biological fouling with a coating according to claims 1-7, being **characterized by** the fact that
• a voltage adjustable via a control unit is applied to the electrical contact (6) and the counter-electrode, where the voltage is so adjusted that the pH value of the liquid layer directly surrounding the surface is differing from the original pH value of the liquid either in basic or in acid direction.

9. Method according to claim 8, being **characterized by** the fact that alternately
• pH values are produced which are above the normal value of the liquid; and
• pH values are produced which are below the normal value of the liquid.

10. Method according to claims 8 and 9, being **characterized by** the fact that
• the produced pH value, which is above the normal value of the liquid, is ranging between 8 and 11, preferably between 9 and 10; and
• the produced pH value, which is below the normal value of the liquid, is ranging between 2 and 6, preferably between 3 and 4.

11. Method according to claims 8-10, being **characterized by** the fact that
the duration of the change of the pH value is 1-10 minutes each, preferably 4 minutes.

12. Method according to claims 8-11, being **characterized by** the fact that
between the changes of the pH value rests are made during which no electrical field is applied and which preferably last for 1-30 minutes.

13. Method according to claims 8-12, being **characterized by** the fact that
between the changes of the pH value rests are made during which no electrical field is applied, where the rests between the first, third, fifth, seventh, etc. shift last for 1-5 minutes, preferably 2 minutes; and the rests between the second, fourth, sixth, eighth, etc. shift last for 5-30 minutes, preferably 15 minutes.

14. Method according to claims 8-13, being **characterized by** the fact that
the application of the electrical field and the change of the pH value of the liquid layer directly surrounding the surfaces are carried out in segments and individually in succession.

## Revendications

1. Revêtement de surfaces qui entrent en contact avec un liquide, surtout avec de l'eau de mer ou de l'eau douce, permettant d'empêcher la salissure biologique par modification périodique de la valeur du pH de la couche liquide entourant directement ce surfaces, **se caractérisant par le fait que**
• le revêtement des surfaces se compose de plusieurs couches, tenant compte du fait que
- sur la surface à protéger (1), si la surface est elle-même conductible d'électricité, au moins une couche isolante à l'électricité (2) doit être appliquée; et
- sur la couche isolante (2) voire sur la surface à protéger (1), si la surface n'est pas elle-même conductible d'électricité, un film de carbone conductible à l'électricité (4), de préférence un film de graphite, doit être collé à l'aide d'une couche de colle conductible d'électricité (3); et
- sur le film de carbone conductible d'électricité (4) une couche de protection résistante à l'eau, stable mécaniquement et résistante aux valeurs du pH basique et acides (5) doit être appliquée, qui permette une liaison conductible entre la couche de colle (3) et la couche du film de carbone (4) et le milieu ambiant aqueux soit par sa propre conductibilité soit par des micropores qui autorisent une certain passage du liquide environnant, mais dont la conductibilité électrique est inférieure à celle de la couche de colle (3) - film de carbone (4);
• la couche du film de carbone (4) est munie d'un contact électrique (6); et
• au moins une contre-électrode se trouve dans le milieu aqueux environnant, contre-électrode grâce à laquelle un champ de courant électrique continu peut être généré par application d'une tension sur les électrodes, un champ de courant dont la polarité peut être inversée et qui peut être réglé et qui génère dans la couche liquide environnant directement la surface, un déplacement de la valeur du pH, la direction et l'amplitude du déplacement du pH devant être réglable via la polarité et la densité du courant.

2. Revêtement selon la revendication 1, **se caractérisant par le fait que**
• le film de carbone (4) est muni de trous; et
• dans l'un des trous, un polymère conductible jouant le rôle de couche collante (3) est inséré.

3. Revêtement selon la revendication 1-2, **se caractérisant par le fait que**
• la couche isolante (2) se compose d'au moins une, de préférence 3 couches de polymère, de préférence de résine époxy 2K; et
• la couche collante conductible (3) se compose d'un polymère conductible; et
• le film de carbone est muni de trous(4) ; et
• la couche de protection (5) se compose d'au moins une, de préférence 2 couches de polymère conductible et/ou de couches de polymère qui présentent des micropores.

4. Revêtement selon la revendication 1-3, **se caractérisant par le fait que**
la couche de protection (5) se compose de polymère rempli de graphite et/ou de suie.

5. Revêtement selon la revendication 1-4, **se caractérisant par le fait que**
un film de cuivre autocollant est utilisé en tant que contact électrique (6).

6. Revêtement selon la revendication 1-5, **se caractérisant par le fait que**
une électrode au graphite ou une électrode au ferro-silicium est utilisée comme contre-électrode.

7. Revêtement selon la revendication 1-6, **se caractérisant par le fait que**
une tension qui est réglable via un appareil de commande, est appliquée au contact électrique (6) et à la contre-électrode.

8. Procédé permettant d'éviter la salissure biologique à l'aide d'un revêtement selon les revendications 1-7, **se caractérisant par le fait que**
une tension réglable via un appareil de commande est appliquée au contact électrique (6) et à la contre-électrode, la tension étant réglée de sorte que la valeur du pH de la couche liquide environnant directement la surface diverge de la valeur du pH original du liquide soit dans le sens basique soit dans le sens acide.

9. Procédé selon la revendications 8, **se caractérisant par le fait qu'**en alternance
• des valeurs du pH supérieures à la valeur normale du liquide soient générées; et
• des valeurs du pH inférieures à la valeur normale du liquide soient générées.

10. Procédé selon les revendications 8 et 9, **se caractérisant par le fait que**
• la valeur du pH générée, qui est supérieure à la valeur normale du liquide, se situe entre 8 et 11, de préférence entre 9 et 10; et
• la valeur du pH générée, qui est inférieure à la valeur normale du liquide, se situe entre 2 et 6, de préférence entre 3 et 4.

11. Procédé selon les revendications 8 - 10, **se caractérisant par le fait que**
la durée de la modification de la valeur du pH s'élève à resp. 1-10 minutes, de préférence 4 minutes.

12. Procédé selon les revendications 8 - 11, **se caractérisant par le fait que**
entre les modifications du pH, des pauses soient faites au cours desquelles aucun champ électrique n'est appliqué et qui devraient durer de préférence 1 à 30 minutes.

13. Procédé selon les revendications 8 - 12, **se caractérisant par le fait que**
entre les modifications du pH, des pauses soient faites au cours desquelles aucun champ électrique n'est appliqué, les pauses devant s'élever entre le premier, le troisième, le cinquième, le septième déplacement etc. à 1-5 minutes, de préférence 2 minutes; et entre le deuxième, le quatrième, le sixième, le huitième déplacement etc. à 5-30 minutes, de préférence 15 minutes.

14. Procédé selon les revendications 8 - 13, **se caractérisant par le fait que**
l'application du champ électrique et la modification de la valeur du pH de la couche liquide environnant directement les surfaces se fasse par segment et individuellement en rotation.
